# EUROPEAN PATENT SPECIFICATION

(11) **EP 2 107 982 B1**
(45) Date of publication and mention of the grant of the patent: **21.03.2012**
(21) Application number: 07749593.5
(22) Date of filing: 31.01.2007
(51) Int. Cl.: B61D 45/00, B60P 7/08

(54) **CARGO TIGHTENER AND STRAP COLLECTOR**
FRACHTFESTZIEHVORRICHTUNG UND RIEMENWICKLER
TENDEUR POUR CHARGEMENT ET COLLECTEUR DE BANDE

(43) Date of publication of application: 14.10.2009
(73) Proprietor: Ratchet Enterprises, LLC, Sylvania, OH 43560 (US)
(72) Inventor: MADACHY, Frank, Joseph, Genoa, OH 43430 (US); YODER, John, Scott, Holland, OH 43528 (US)
(74) Representative: Pfenning, Meinig & Partner GbR
(86) International application number: PCT/US2007/002614
(87) International publication number: WO 2008/094146

(56) References cited:
- WO-A1-93/18937
- DE-U1-202004 000 491
- US-A- 2 926 865
- US-A- 5 611 520
- US-A- 5 611 520
- US-A- 6 102 371
- US-A- 6 102 371
- US-A1- 2004 094 650
- US-A1- 2004 094 650
- US-B1- 7 100 902
- US-B1- 7 100 902
- US-B2- 6 547 218

## Description

### BACKGROUND OF THE INVENTION

### Field of Invention

The present invention relates to a device for collection and storage of the free, non-active, portion of a strap of a manually operated cargo tightener which is used to secure cargo to be transported.

### Description of the Related Art

The typical prior art cargo tightener, which is modified to make the present invention, includes a shaft provided at one end of a connecting link or arm. The shaft is journaled in one end of the connecting arm, thus providing for rotatable attachment of a lever to the connecting arm. A first, or short, strap is firmly secured to a bolt or pin in the other end of the connecting arm, and has at its free end, a hook or other device for attachment to a vehicle transporting the cargo.

A second strap has a hook or other device at one of its ends. The hook is attached to the transportation vehicle. The other end, or free or non-active end, of the second strap is inserted through a slot in the rotatable shaft. A ratchet arrangement permits tightening of the strap by back and forth movement of the lever with respect to the connecting link. Because the connecting arm or link is held firmly in place by the first strap, the second strap tightens down over the cargo. The cargo tightener is conventional and, therefore, will not be described in any great detail except with regard to the modification of the lever to provide the strap collector portion of the present invention.

A common problem when using the above mentioned cargo tightener with tensioning straps concerns the handling of the free end of the strap not used when securing the cargo. This strap portion has to be thoroughly secured to the cargo in order not to flutter in the encountering wind, or to trail on the ground, both cases leading to a hasty soiling and wearing down of the strap. Further, a freely fluttering strap is a danger to traffic, particularly in connection with the wider 6 to 9 m (24 to 30 foot) long straps used professionally by hautage contractors.

Many attempts to solve these problems are known in the prior art. US 2004/0094650 A1 shows a strap fastener system including a strap fastener for fastening a belt, and a winding device for winding the strap. The winding device includes a housing which is attached to a connecting arm portion of the typical prior art cargo tightener. A reel is put in the housing for winding the strap, and a torque spring is arranged between the reel and the control device for automatically rotating the reel in the non-rotational position of the control device.

US 5,611,520 A shows a strap collector which is designed to be attached to the connecting arm of a standard cargo tightener. The strap collector includes a magazine for the protection and storage of the long tensioning strap of the cargo tightener when wound to the shaft of the strap collector.

US 6,609,275 B1 shows a strap tightener with an auto pulling device connected to a seat. The auto pulling device includes a housing and a reversing device. The reversing device is rotatably received in the housing. The housing would correspond to a connecting arm portion of a prior art cargo tightener.

US 6,102,371 A shows a strap tensioning and collection device having a variable length strap and a fixed length strap operatively associated with the strap storage section, and a strap tensioning section.

US 4,622,721 A shows a device for connecting components to a belt.

DE 36 39 712 A1 shows a tensioning ratchet, in particular for belts, which is equipped with a ratchet body having a retaining bolt for fastening a safety belt, and having a ratchet lever which is mounted at the other end of the ratchet body so as to be rotatable about the axle of a slotted roller for fastening the end of a tensioning belt to be wound thereon.

DE 20 2004 000 491 U1 shows a strap collector comprising a spiral spring for winding up a strap onto a reel.

All of the above devices perform generally satisfactorily, but share the problem of relatively high costs and difficulty of manufacture. In addition, they are rather bulky. Thus, those skilled in the art continued their search for a better cargo tightener and strap collector.

### SUMMARY OF THE INVENTION

The aim of the present invention is to provide a cargo tightener and strap collector which is more cost effective compared with prior art devices, is less bulky, and is easier to manufacture.

This is accomplished by providing a combination cargo tightener and strap collector comprising the features of claim 1. Preferred embodiments are defined in the dependent claims.

The main feature of the invention is to provide the strap collector on the lever portion of the cargo tightener, rather than on the connecting arm segment, as in the prior art. The advantages of this will become apparent by a careful reading of the detailed description, with appropriate reference to the accompanying drawings, wherein like numerals designate like parts in the several views.

### BRIEF DESCRIPTION OF THE DRAWINGS

The invention is to be described in more detail below using exemplary embodiments.
Figure 1 is a perspective view of a prior art cargo tightener.
Figure 2 is an end elevational view of a cargo loaded on a platform showing how the prior art cargo tightener of Fig. 1 is fastened to hold a load in position, and illustrating the free end or tail of the ratchet strap that is left to be dealt with after the cargo tightener is tightened to the desired extent.
Figure 3 is a view similar in part to Fig. 2, but illustrating the use of a construction embodying the present invention, and showing how the problem of the ratchet strap tail is solved by the present invention.
Figure 4 is a perspective view of a construction embodying the present invention with the cargo straps attached.
Figure 5 is an elevational view of the construction of Figure 4 in its open position.
Figure 6 is a perspective view of the construction of Figure 4 in its closed position, with one of the ratchet straps removed for clarity.
Figure 7 is a perspective view of a modification of the present invention.
Figure 8 is a diagrammatic cross-sectional view of the construction shown in Figure 7 illustrating how the ratchet strap is fed through the device.
Figure 9 is an enlarged view, partly in section, of the construction shown in Figure 7, illustrating how the ratchet strap tail may be wound on the handle by turning the right hand knob, as long as the left hand knob has not been tightened.
Figure 10 is a view, similar in part to Figure 9, illustrating how the right hand knob can not be turned further once the left hand knob is tightened against the sidewall, thus securing the ratchet tail in place during transport of a load.

### DETAILED DESCRIPTION OF THE PREFERRED EMBODIMENT

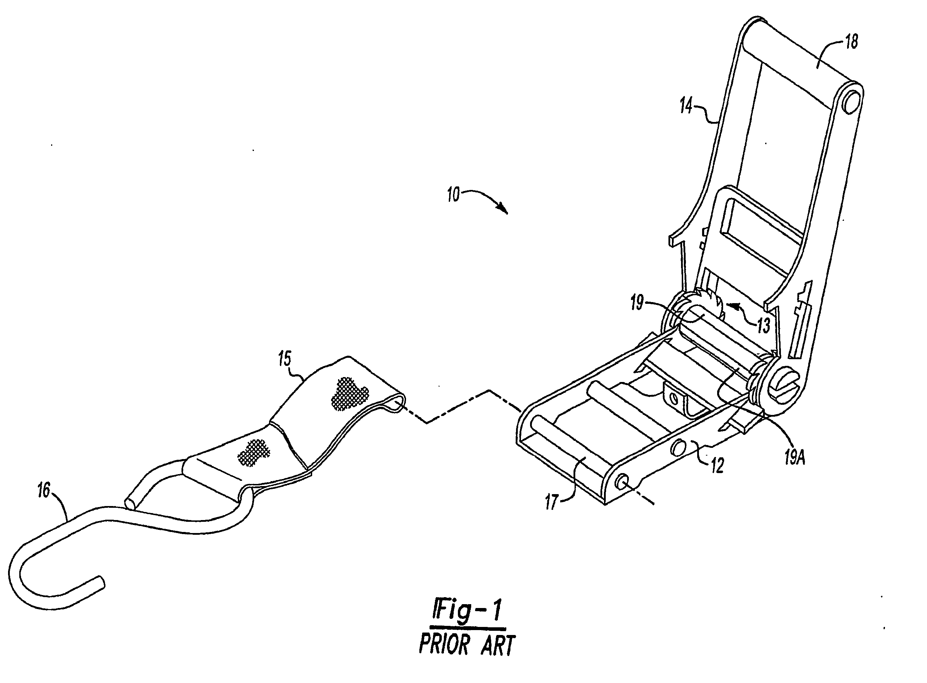

Referring to Figure 1, there is shown a prior art cargo tightener and strap collector, generally designated by the numeral 10. The cargo tightener and strap collector 10 comprises a connecting arm or link 12, and a lever or arm 14. A strap 15 is provided with a hook 16 at one end thereof for connection to a transportation vehicle (not shown). The other end of strap 15 is firmly held to connecting arm 12 by pin 17. Reciprocal motion of lever 14 using handle 18 will cause shaft 19 to rotate due to the ratchet and pawl assembly 13.

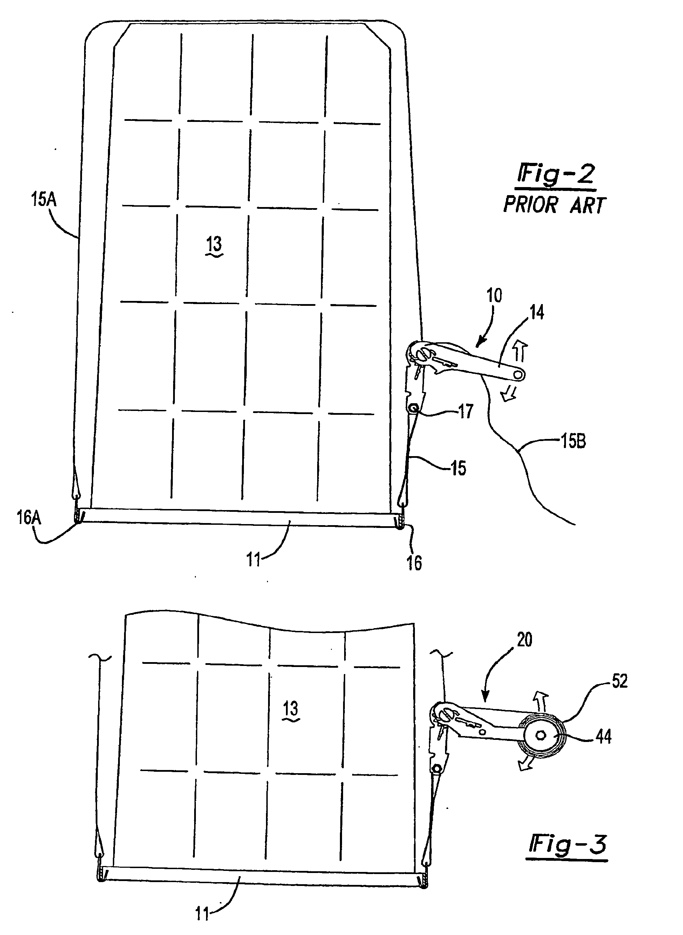

With reference to Figure 2, there is shown the prior art cargo tightener and strap collector 10 in a typical use situation, attached to a cargo platform 11, usually of a movable type, and tightened about a load L to secure or tighten it in position. While the cargo platform is usually of the movable type, such as a trailer which may be pulled by a truck or tractor, cargo tightener and strap collector 10 may also be used to secure stationary loads.

While strap 15 causes no problem in the art, as when tightened on the load 11, it is always held taught by virtue of the hook 16 and the pin 17 when under tension, the same is not true of second strap 15A. Second strap 15A has at one end a second hook 16A attached to cargo platform 11. The other end of second strap 15A is threaded through an opening or slot 19A in shaft 19, which is caused to rotate by reciprocal motion of lever 14 using handle 18. This will cause shaft 19 to rotate due to the ratchet and pawl assembly 13. While a portion of second strap 15A intermediate its' ends will wind around shaft 19, a large portion or tail 15B will remain loose, and must be secured for safe transit of load 13.

The securing of ratchet strap tail 15B is a serious problem in the art as there is no readily available and cost effective place to store it. Usually the person placing the load 13 on platform 16 will simply wind the tail 15B around a portion of second strap 15A. Many times the tail 15B will be tied in a loose knot around the second strap 15A. No matter what solution is tried, the tail 15B frequently becomes loose during transit of the load 13 and flaps in the breeze as the load L is transported down the road, causing a hazard to surrounding drivers and pedestrians. Since many cargo tighteners are usually needed to secure load 13 to platform 11, many tails 15B may be causing a hazard at the same time.

Referring to Figure 3, the present invention relates to a modification of the prior art lever or arm 14 to solve the problems of the prior art. For purposes of understanding, new reference numerals are used when referring to the present invention. It can be seen that the improved cargo tightener and strap collector 20 now provides for storage of the strap, now referred to by the numeral 50, on the arm or lever 24. There is provided a ready and secure place for storage of the tail 50A in the form of roll 52, eliminating the problems of the prior art in a manner to be fully described hereinafter.

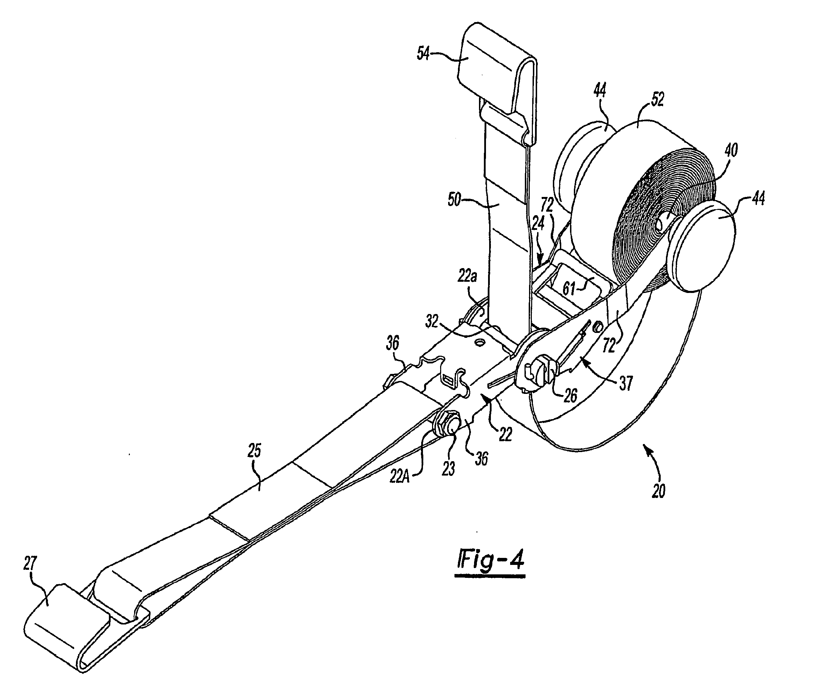

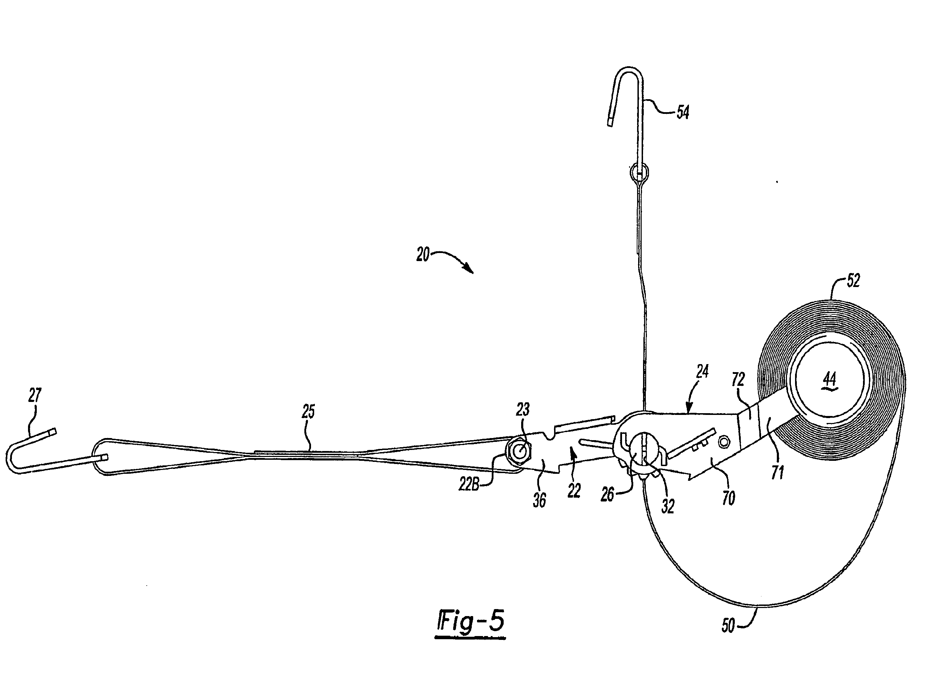

Referring now to Figures 4-6, the present invention relates to an improved cargo tightener and strap collector, generally designated by the numeral 20. An improved apparatus for tightening and collecting a strap, or strap collector, or combination cargo tightener and strap collector 20, includes a connecting arm or link 22 and a lever 24. Connecting arm 22 extends in a longitudinal direction, and may be substantially similar to the connecting arm 12 shown in the prior art construction of Figure 1. It is a modification to the lever of the prior art construction, identified by the numeral 24, which provides a novel cargo tightener and strap collector 20. As with the prior art, there is provided a first shaft 26 journaled for rotation in one, or first, end 22A of the connecting arm 22. At the other, or second, end 22B of the connecting arm 22 is provided a pin 23, to which a first, or short, strap 25 is attached. A first hook or fastening means or fastening device 27 is attached to the other end of the strap 25. In use, the hook 27 will be attached to the transportation vehicle on which the cargo being tightened is being transported.

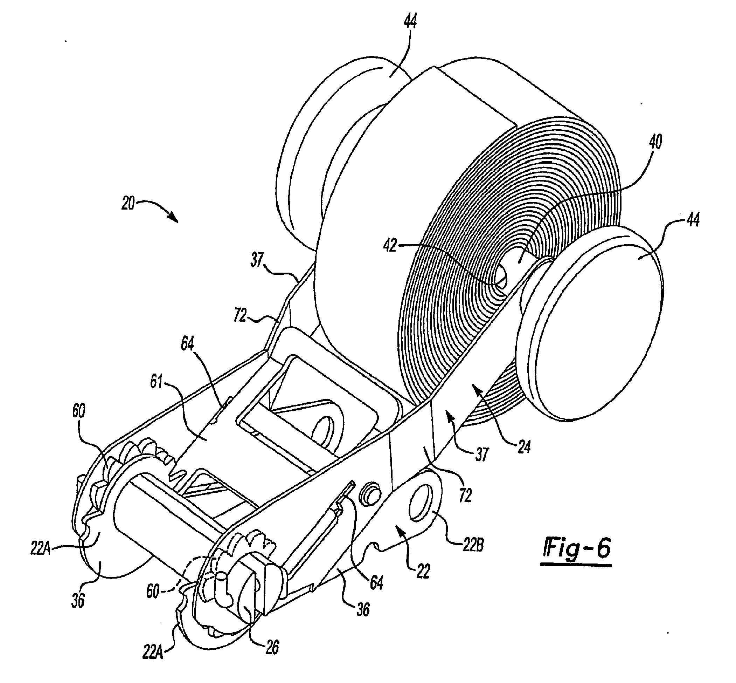

As in the prior art devices, reciprocal rotation of the lever 24 will cause co-rotation of the first shaft 26. Journals for first shaft 26, as well as second shaft 40, are provided by opposed apertures provided in a first pair of spaced apart sidewalls 36 provided in connecting arm 22, and a second pair of spaced apart sidewalls 37 in the lever 24. A second shaft 40 has provided therein second slot 42 (Fig. 6) to accept a free end, i.e., the end without the second hook 54, of a second belt 50, as hereinafter described.

At least a first portion A of shaft 40 may extend beyond at least one of the second pair of sidewalls 37 (Fig. 4) so that a knob 44 may be attached thereto for rotation of the second shaft 40. In the preferred embodiment, a first portion and a second portion of the second shaft 40 will extend beyond the second pair of spaced apart sidewalls 37, and a knob 44 will be attached to each portion of the second shaft.

Reciprocal rotation of the lever 24 will cause co-rotational rotation of the first shaft 26 by virtue of a pair of ratchet wheels 60 which are mounted on the first shaft 26 between the first pair of sidewalls 36 and the second pair of spaced apart sidewalls 37. It is preferred that two ratchet wheels 60 be used, although one may possibly be used. Pawl 61 aids in the rotation of the first shaft 26 by operating on the ratchet wheel 60. The pawl 61 is spring loaded and slides in a pair of opposed slots 64 (Fig. 6) in the second pair of opposed sidewalls 37.

Second, or long, strap 50 is provided having second hook 54 provided at one end thereof. The free or non-active end of strap 50, so referred to because it has no connection to second hook 54, is first passed through first slot 32 and then inserted in second slot 42 (Fig. 6). Second shaft 40 is then rotated, with the aid of knobs 44, to roll up free end of strap 50 into a roll 52.

In use second hook 54, and second strap 50, are completely unrolled and removed from second shaft 40. Second hook 54 is attached to the transportation vehicle on which the cargo is to be transported, at the appropriate location. The free end of the strap 50 is placed through first slot 32 in first shaft 26, and the lever 24 is reciprocally rotated, causing co-rotational movement of the first shaft 26. Since the second strap 50 is inserted in the first slot 32, and the connecting arm 22 is restrained by the first strap 25 and the first hook 27, the cargo tightener and strap collector 20 is tightened down on the cargo. At this point, the free end of the second strap 50 is inserted in the second slot 42 in the second shaft 40 and the knobs 44 are rotated to take up any slack in the strap before the cargo is transported.

Alternately, the free end of the strap of the second strap 50 may be left inserted in the second slot 42 in the second shaft 40, and the second strap 50 along with second hook 54 may be pulled out, causing the roll 52 to unwind until the second hook 54 may be attached to the transportation vehicle in the appropriate spot. The lever 24 is then reciprocally rotated causing co-rotational movement of the first shaft 26, and the tightening of the cargo tightener and strap collector 20 on the cargo (not shown) in the manner previously described. Any slack in the second strap 50 is taken up by rotating the knob or knobs 44 until the slack is removed.

In order to provide clearance for the roll 52 so that it does not strike the cargo being transported, the lever 24 is provided with a first substantially linearly extending portion 70, and a second linearly extending portion 71 extending at an angle with respect to the first portion 70, thus elevating the roll 52 away from the cargo by elevating the second shaft 40 away from the cargo.

If it is desired to have the linearly and angularly extending portions 71 of the second pair of sidewalls 37 be further apart proximate the roll 52, a pair of diverging portions 72 of the second pair of sidewalls 37 may be interposed between the first linearly extending portion 70 and the second linearly and angularly extending portion 71 of each of said second pair of sidewalls 37.

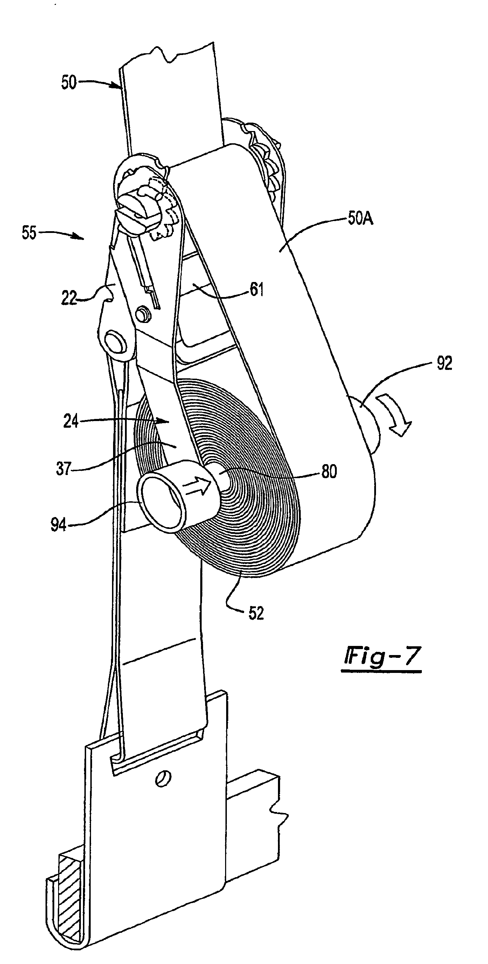

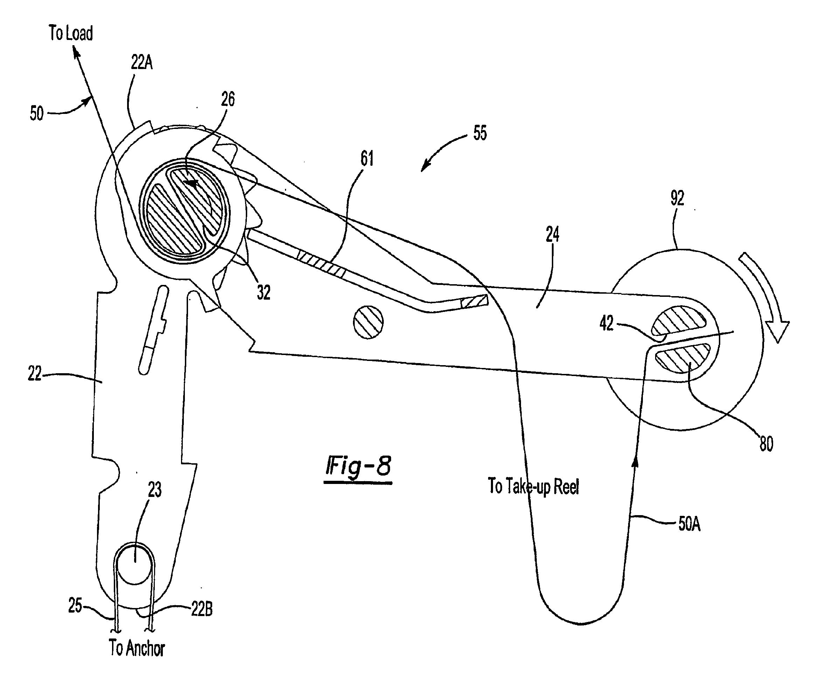

Referring now to Figures 7-10, there is illustrated a modification of the present invention which locks the roll 52 positively in position on the arm or lever 24 of our cargo tightener and strap collector, now generally indicated by the numeral 55 for ease of understanding. This is accomplished by a modification to shaft 40 and knobs 44 described in regard to Figures 4-6. In this modification of the invention, threaded shaft 80 is used in place of the second shaft 40. Threaded shaft 80 may be hollow, or at least partially hollow, and may have internal or external threads for the purposes described below. In the preferred embodiment, threaded shaft 80 is hollow, and has an aperture, opening, or hollow portion 82. Aperture 82 may include first portion or first threaded portion 84, and second portion or second threaded portion 86, of threaded shaft 80. Threaded shaft 80 will still have slot 42 provided therein to receive ratchet tail 50A in the manner described above.

First threaded portion 84 and second threaded portion 86 of threaded shaft 80 may be of the same or different diameters, as desired. It is preferable that the apertures in the second pair of sidewalls 37 be slightly larger than the diameter of the adjacent threaded portions (84,86) of the threaded shaft 80 to accept a first threaded fastener 88 and a second threaded fastener 90. In the illustrated embodiment, the first threaded fastener 88 is of a smaller diameter than the second threaded fastener 90, so the first sidewall aperture 37A is of a smaller diameter that the second sidewall aperture 37B, and both are larger than their respective fasteners to allow free rotation of first threaded fastener 88 and a second threaded fastener 90 with respect to the associated aperture.

First threaded fastener 88, which may be of any type well known in the art, is secured for non-rotation with respect to first rotatable knob 92 by any known means. In other words, when first rotatable knob 92 is rotated, first threaded fastener 88 rotates. First threaded fastener 88 is also fixed with regard to first threaded portion 84 of threaded shaft 80. Since first sidewall aperture 37A is larger than first threaded fastener 88, and first threaded fastener 88 is fixed with regard to first rotatable knob 92 and first threaded portion 84, when first rotatable knob 92 is rotated, threaded shaft 80 will rotate as long as second rotatable knob 94 is not tightened against a sidewall 37.

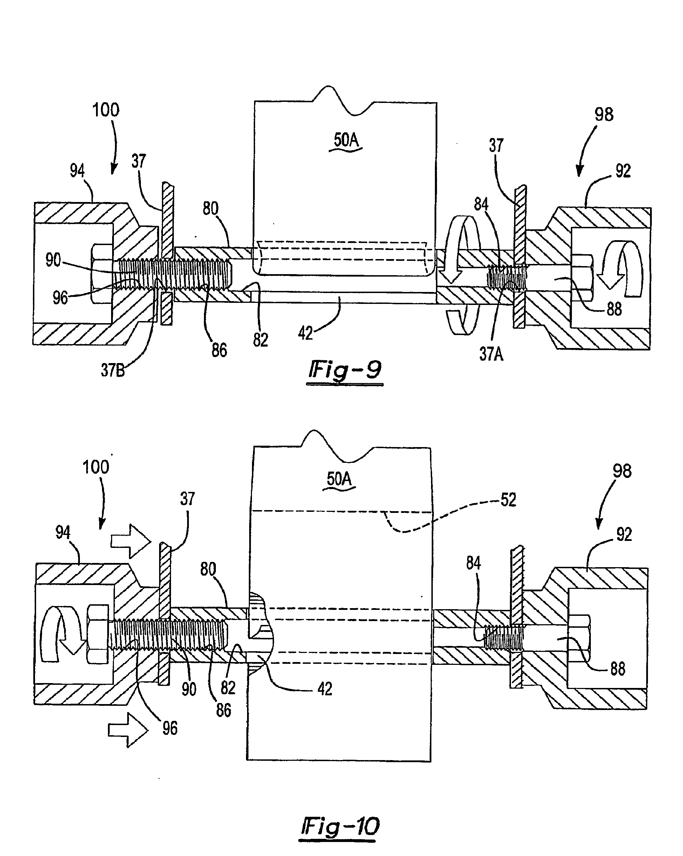

Second threaded fastener 90 is also fixed with regard to its' respective threaded portion (second threaded portion 86) of aperture 82. However, second rotatable knob 94 is not fixed with respect second threaded fastener 90 but, instead, is able to rotate with respect thereto because second rotatable knob 94 has a threaded aperture 96 with threads complementary to those found on second threaded fastener 90. Thus, rotation of second rotatable knob 94 will move it toward and away from respective sidewall 37. In operation, second rotatable knob 94 is positioned in its loosened position, as shown in Figure 9. Ratchet tail 50A is inserted in slot 42, and first rotatable knob 92 is rotated, which rotates threaded shaft 80, which causes ratchet tail 50A to be wound on threaded shaft 80 until it is wound up to form roll 52. At this point, second rotatable knob 94 is rotated until it is tight against sidewall 37, and sidewall 37 is tight against hollow shaft 80, thus preventing any further rotation of the threaded shaft 80 by the first rotatable knob 92. Since the free end of strap 50 (ratchet tail 50A) was inserted into slot 42, and the remainder of strap 50 was wound on top of ratchet tail 50A before second rotatable knob 94 was tightened, there is no loose portion of the strap 50 to come undone and cause the dangers posed by the prior art cargo tighteners.

The scope of the present invention is not limited to the use of threaded fasteners and knobs, as any rotation mechanism by which the threaded shaft 80 can be rotated, and then selectively be prevented from rotation, is well within the scope of the present invention. Many rotation mechanisms and/or rotation means are known in the art which are suitable for use in the present invention.

For example, the threaded shaft 80 journaled for rotation between the second pair of spaced apart sidewalls 37 of the lever 24 may have a first threaded portion 84 to accept a first rotation mechanism 98, and a second threaded portion 86 to accept a second rotation mechanism 100. The first means of rotation 98 is operable to rotate the threaded shaft 80, and the second means of rotation 100 is operable to restrain or permit rotation of the threaded shaft 80. The use of any motion transfer means whereby rotary motion is transformed into axial motion is well within the skill of the art.

Thus, by carefully considering the problems in the prior art devices, we have provided a novel cargo tightener and strap collector which is simpler in construction, easier to manufacture and less costly than prior art devices.

## Claims

1. A combination cargo tightener and strap collector comprising
a) a connecting arm (22) extending in a longitudinal direction, the connecting arm (22) having a pair of spaced apart sidewalls (36) and having a first strap (25) attached thereto;
b) a lever (24) pivotally journaled in the connecting arm (22) by a first shaft (26), the first shaft (26) having a first slot (32) for introducing an end of a second strap (50), the first shaft (26) operable for co-rotational movement with the lever (24) for tightening the second strap (50), the lever (24) having a second pair of spaced apart sidewalls (37);
c) a second shaft (40) having a second slot (42) therein to accept the end of the second strap (50) after the second strap (50) is tightened on the cargo;
d) at least one toothed ratchet wheel (60) fixedly mounted to the first shaft (26) between the first pair of spaced apart sidewalls and the second pair of spaced apart sidewalls; and
e) a pawl (61) mounted to the lever (24) for reciprocal movement to engage and disengage from the at least one toothed ratchet wheel (60),
**characterized in that**
the second shaft (40) is mounted to the second pair of spaced apart sidewalls (37) of the lever (24) for rotation.

2. The combination cargo tightener and strap collector defined in claim 1, wherein a first portion of the second shaft (40) extends past at least one of the second pair of spaced apart sidewalls (37) of the lever (24).

3. The combination cargo tightener and strap collector defined in claim 2, further comprising turning aid means mounted to the first portion of the second shaft (40) extending past at least one of the second pair of spaced apart sidewalls (37) of the lever (24).

4. The combination cargo tightener and strap collector defined in claim 2, wherein each one of the second pair of spaced apart sidewalls (37) of the lever (24) comprises a straight portion (70) and a portion (71) extending at an angle to the straight portion (71).

5. The combination cargo tightener and strap collector defined in claim 4, wherein each one of the second pair of spaced apart sidewalls (37) of the lever (24) comprises a first linearly extending portion (70) and a second linearly extending portion (71) extending at an angle to the first linearly extending portion.

6. The combination cargo tightener and strap collector defined in claim 5, wherein each one of the second pair of spaced apart sidewalls (37) of the lever (24) comprises a diverging portion (72) between the first linearly extending portion (70), and the second linearly extending portion (71), whereby the second linearly extending portion (71) of the second pair of spaced apart sidewalls (37) is spaced apart further than the first linearly extending portion (70) of the second pair of spaced apart sidewalls (37).

7. The combination cargo tightener and strap collector defined in claim 3, wherein the turning aid means comprises a knob (44) mounted to the first portion of the second shaft (40) extending past the at least one of the second pair of spaced apart sidewalls (37) of the lever (24).

8. The combination cargo tightener and strap collector defined in claim 7, further comprising a second portion of the second shaft (40) extending past the other of the second pair of spaced apart sidewalls (37) of the lever (24) and a knob (44) mounted to the second portion of the second shaft (40).

9. The combination cargo tightener and strap collector defined in claim 4, wherein the pawl (61) is mounted in a slot (64) in the lever (24).

10. The combination cargo tightener and strap collector defined in claim 1, wherein the second pair of spaced apart sidewalls (37) are exterior to the pair of spaced apart sidewalls (36) of the connecting arm (22).

## Patentansprüche

1. Kombination aus einer Frachtfestziehvorrichtung und einem Riemenwickler, welche aufweist:
a) einen Verbindungsarm (22), der sich in einer Längsrichtung erstreckt, welcher Verbindungsarm (22) ein Paar von einen gegenseitigen Abstand aufweisenden Seitenwänden (36) und einen daran befestigten ersten Riemen (25) hat;
b) einen Hebel (24), der durch eine erste Welle (26) schwenkbar in dem Verbindungsarm (22) gelagert ist, welche erste Welle (26) einen ersten Schlitz (32) zum Einführen eines Endes eines zweiten Riemens (50) hat, die erste Welle (26) für eine gemeinsame Drehbewegung mit dem Hebel (24) betätigbar ist, um den zweiten Riemen (50) festzuziehen, wobei der Hebel (24) ein zweites Paar von einen gegenseitigen Abstand aufweisenden Seitenwänden (37) hat;
c) eine zweite Welle (40) mit einem zweiten Schlitz (42) in dieser zur Aufnahme des Endes des zweiten Riemens (50), nachdem der zweite Riemen (50) auf der Fracht festgezogen ist;
d) zumindest ein gezahntes Klinkenrad (60), das fest an der ersten Welle (26) zwischen dem ersten Paar von einen gegenseitigen Abstand aufweisenden Seitenwänden und dem zweiten Paar von einem gegenseitigen Abstand aufweisenden Seitenwänden befestigt ist; und
e) eine Klinke (61), die an dem Hebel (24) für eine hin- und hergehende Bewegung für einen Eingriff mit und eine Trennung von dem zumindest einen gezahnten Klinkenrad (60) befestigt ist,
**dadurch gekennzeichnet, dass**
die zweite Welle (40) an dem zweiten Paar von in gegenseitigem Abstand angeordneten Seitenwänden (37) des Hebels (24) für eine Drehung befestigt ist.

2. Kombination aus einer Frachtfestziehvorrichtung und einem Riemenwickler nach Anspruch 1, bei der ein erster Bereich der zweiten Welle (40) sich an zumindest einer von dem zweiten Paar von im gegenseitigen Abstand angeordneten Seitenwänden (37) des Hebels (24) vorbei erstreckt.

3. Kombination aus einer Frachtfestziehvorrichtung und einem Riemenwickler nach Anspruch 2, weiterhin aufweisend Drehhilfsmittel, die an dem ersten Bereich der zweiten Welle (40), die sich an zumindest einer von dem zweiten Paar von einen gegenseitigen Abstand aufweisenden Seitenwänden (37) des Hebels (24) vorbei erstreckt, befestigt sind.

4. Kombination aus einer Frachtfestziehvorrichtung und einem Riemenwickler nach Anspruch 2, bei der jede von dem zweiten Paar von in gegenseitigem Abstand angeordneten Seitenwänden (37) des Hebels (24) einen geraden Bereich (70) und einen sich unter einem Winkel zu dem geraden Bereich (70) erstreckenden Bereich (71) aufweist.

5. Kombination aus einer Frachtfestziehvorrichtung und einem Riemenwickler nach Anspruch 4, bei der jede von dem zweiten Paar von einen gegenseitigen Abstand aufweisenden Seitenwänden (37) des Hebels (24) einen ersten sich linear erstreckenden Bereich (70) und einen zweiten sich linear erstreckenden Bereich (71), der sich unter einem Winkel zu dem ersten sich linear erstreckenden Bereich erstreckt, aufweist.

6. Kombination aus einer Frachtfestziehvorrichtung und einem Riemenwickler nach Anspruch 5, bei der jede von dem zweiten Paar von einen gegenseitigen Abstand aufweisenden Seitenwänden (37) des Hebels (24) einen divergierenden Bereich (72) zwischen dem ersten sich linear erstreckenden Bereich (70) und dem zweiten sich linear erstreckenden Bereich (71) aufweist, wodurch der zweite sich linear erstreckende Bereich (71) des zweiten Paares von einen gegenseitigen Abstand aufweisenden Seitenwänden (37) einen größeren gegenseitigen Abstand aufweist als der erste sich linear erstreckende Bereich (70) des zweiten Paares von einen gegenseitigen Abstand aufweisenden Seitenwänden (37).

7. Kombination aus einer Frachtfestziehvorrichtung und einem Riemenwickler nach Anspruch 3, bei der die Drehhilfsmittel einen Knopf (44) aufweisen, der an dem ersten Bereich der zweiten Welle (40), die sich an zumindest einer von dem zweiten Paar von einen gegenseitigen Abstand aufweisenden Seitenwänden (37) des Hebels (24) vorbei erstreckt, befestigt ist.

8. Kombination aus einer Frachtfestziehvorrichtung und einem Riemenwickler nach Anspruch 7, weiterhin aufweisend einen zweiten Bereich der zweiten Welle (40), die sich an der anderen von dem zweiten Paar von einen gegenseitigen Abstand aufweisenden Seitenwänden (37) des Hebels (24) vorbei erstreckt, und einen Knopf (44), der an dem zweiten Bereich der zweiten Welle (40) befestigt ist.

9. Kombination aus einer Frachtfestziehvorrichtung und einem Riemenwickler nach Anspruch 4, bei der die Klinke (61) in einem Schlitz (64) in dem Hebel (24) befestigt ist.

10. Kombination aus einer Frachtfestziehvorrichtung und einem Riemenwickler nach Anspruch 1, bei der das zweite Paar von einen gegenseitigen Abstand aufweisenden Seitenwänden (37) außerhalb des Paares von einen gegenseitigen Abstand aufweisenden Seitenwänden (36) des Verbindungsarms (22) ist.

## Revendications

1. Tendeur pour chargement et collecteur de bande en combinaison comprenant :
a) un bras de connexion (22) s'étendant dans une direction longitudinale, le bras de connexion (22) comportant une paire de parois latérales espacées (36) et comportant une première bande (25) qui lui est fixée ;
b) un levier (24) tourillonné de façon pivotante dans le bras de connexion (22) au moyen d'un premier arbre (26), le premier arbre (26) comportant une première fente (32) pour introduire une extrémité d'une seconde bande (50), le premier arbre (26) pouvant opérer selon un mouvement de co-rotation avec le levier (24) comportant une seconde paire de parois latérales espacées (37) ;
c) un second arbre (40) comportant une seconde fente (42) en son sein pour accepter l'extrémité de la seconde bande (50) après que la seconde bande (50) est serrée sur le chargement ;
d) au moins une roue à rochet dentée (60) montée de façon fixe sur le premier arbre (26) entre la première paire de parois latérales espacées et la seconde paire de parois latérales espacées ; et
e) un cliquet (61) monté sur le levier (24) pour un mouvement en va-et-vient afin d'assurer un engagement et un désengagement vis-à-vis de l'au moins une roue à rochet dentée (60),
**caractérisés en ce que** le second arbre (40) est monté sur la seconde paire de parois latérales espacées (37) du levier (24) pour réaliser une rotation.

2. Tendeur pour chargement et collecteur de bande en combinaison selon la revendication 1, dans lesquels une première partie du second arbre (40) s'étend au-delà d'au moins l'une de la seconde paire de parois latérales espacées (37) du levier (24).

3. Tendeur pour chargement et collecteur de bande en combinaison selon la revendication 2, comprenant en outre un moyen d'aide en rotation monté sur la première partie du second arbre (40) s'étendant au-delà d'au moins l'une de la seconde paire de parois latérales espacées (37) du levier (24).

4. Tendeur pour chargement et collecteur de bande en combinaison selon la revendication 2, dans lesquels chacune de la seconde paire de parois latérales espacées (37) du levier (24) comprend une partie rectiligne (70) et une partie (71) s'étendant selon un certain angle par rapport à la partie rectiligne (71).

5. Tendeur pour chargement et collecteur de bande en combinaison selon la revendication 4, dans lesquels chacune de la seconde paire de parois latérales espacées (37) du levier (24) comprend une première partie s'étendant linéairement (70) et une seconde partie s'étendant linéairement (71) s'étendant selon un certain angle par rapport à la première partie s'étendant linéairement.

6. Tendeur pour chargement et collecteur de bande en combinaison selon la revendication 5, dans lesquels chacune de la seconde paire de parois latérales espacées (37) du levier (24) comprend une partie divergente (72) entre la première partie s'étendant linéairement (70) et la seconde partie s'étendant linéairement (71) et ainsi, la seconde partie s'étendant linéairement (71) de la seconde paire de parois latérales espacées (37) est davantage espacée que la première partie s'étendant linéairement (70) de la seconde paire de parois latérales espacées (37).

7. Tendeur pour chargement et collecteur de bande en combinaison selon la revendication 3, dans lesquels le moyen d'aide la rotation comprend un bouton (44) monté sur la première partie du second arbre (40) s'étendant au-delà de l'au moins une de la seconde paire de parois latérales espacées (37) du levier (24).

8. Tendeur pour chargement et collecteur de bande en combinaison selon la revendication 7, comprenant en outre une seconde partie du second arbre (40) s'étendant au-delà de l'autre de la seconde paire de parois latérales espacées (37) du levier (24) et un bouton (44) monté sur la seconde partie du second arbre (40).

9. Tendeur pour chargement et collecteur de bande en combinaison selon la revendication 4, dans lesquels le cliquet (61) est monté dans une fente (64) dans le levier (24).

10. Tendeur pour chargement et collecteur de bande en combinaison selon la revendication 1, dans lesquels les parois de la seconde paire de parois latérales espacées (37) sont extérieures aux parois de la paire de parois latérales espacées (36) du bras de connexion (22).
